# EUROPEAN PATENT SPECIFICATION

(11) **EP 0 702 600 B1**
(45) Date of publication and mention of the grant of the patent: **19.11.1997**
(21) Application number: 94917330.6
(22) Date of filing: 09.05.1994
(51) Int. Cl.: B05B 1/02, B05B 15/00, B29C 53/48, A01G 25/02

(54) **DRIP IRRIGATION HOSE AND METHOD OF MANUFACTURE**
SCHLAUCH FÜR TROPFBEWÄSSERUNG UND DESSEN HERSTELLUNGSVERFAHREN
TUYAU D'IRRIGATION PAR RUISSELLEMENT ET SON PROCEDE DE PRODUCTION

(30) Priority: 26.05.1993 US 67382; 27.07.1993 US 98215
(43) Date of publication of application: 27.03.1996
(73) Proprietor: T-SYSTEMS INTERNATIONAL, INC., San Diego, CA 92121-2401 (US)
(72) Inventor: DeFRANK, Michael, Temecula, CA 92592 (US); MARCHETTI, David, San Diego, CA 92128 (US); TEEGARDIN, David, L., San Diego, CA 92126 (US)
(74) Representative: Parry, Christopher Stephen
(86) International application number: US9405114
(87) International publication number: WO9427728

(56) References cited:
- DE-A- 2 508 865
- US-A- 4 247 051
- US-A- 4 247 051
- US-A- 4 548 360
- US-A- 4 642 152
- US-A- 4 850 947
- US-A- 4 984 739
- US-A- 5 123 984

## Description

This invention relates to drip irrigation and, more particularly, to a drip irrigation hose with an improved outlet construction and a method for its manufacture.

Drip irrigation hose can be classified into two types - hose having discrete emitters and hose having continuous, integral emitters. An example of a drip irrigation hose having discrete emitters is shown in US Patent No. 4,850,531. An example of a drip irrigation hose having continuous, integral emitters is shown in US Patent No. 4,247,051. Drip irrigation hose having continuous integral emitters offers the possibility of lower cost and ease of manufacture and installation.

The design of the inlets to and outlets from the emitters is critical. If the effective outlet area of the emitters is too large, dirt and debris can collect externally in the outlets, thereby causing external clogging. If the effective inlet and outlet areas of the emitters are too small, they become clogged internally and cease to serve their purpose. Further, if the effective outlet areas of the emitters are too small, water squirts out of the hose instead of dripping, and soil erosion results.

US Patent No. 4,247,051 discloses a drip irrigation hose formed by bending a strip plastic film along its length to form an overlapping longitudinal seam between opposing longitudinal margins of the film. First and second longitudinally extending, laterally spaced, transverse ribs interconnect the opposing margins along their length to seal the overlapping longitudinal seam. The ribs are formed by one or more molten plastic beads extruded onto the film. As a result, a flow regulating passage is defined by the ribs and the opposing margins and a supply passage is defined by the remainder of the film. Water flows from the supply passage to the flow regulating passage through a plurality of longitudinally spaced inlets. Water flows from the flow regulating passage to the exterior of the hose through a plurality of longitudinally spaced outlets longitudinally spaced from the respective inlets to provide a substantial path length from each inlet to a respective outlet. In one embodiment, the outlets each comprise two parallel slits that form between them a flexible flap. The flap serves as an outlet valve, opening and closing as the hose is pressurized and depressurized. However, unless the plastic film is very thick and rigid, the flaps do not close consistently when the hose is depressurized and therefore, the outlets can become clogged by soil drawn into the slits.

A problem encountered in the manufacture of continuous emitter drip irrigation hose is coordinating the position of the outlets and the track pattern of the ribs. If care is not taken, the track pattern of the ribs may overlap the outlets, and thereby cause the outlets to be on the high pressure side of the flow regulating passages.

One aspect of the invention is a drip irrigation hose of the continuous emitter type in which the outlets from the regulating passage each comprise a single longitudinal slit. By controlling the length of the slits and the flexibility of the film, water drips from the outlets when the hose is pressurized without clogging when the hose is depressurized. The slits are sufficiently long and the film is sufficiently flexible so the water drips from the outlets when the hose is pressurized. The slits are sufficiently short and the film is sufficiently rigid so the outlets close completely when the hose is depressurized.

Another aspect of the invention is a method for making a drip irrigation hose having longitudinal single slit outlets and/or inlets. A first outlet and/or inlet forming wheel has one or more knife blades on its periphery. A second backing wheel engages the first wheel to establish a first nip therebetween. The backing wheel has on its periphery a circumferential slot into which the knife blade fits at the first nip. A third rib forming wheel has around its periphery impressions that define a desired track pattern for the ribs. A second nip is established with a third wheel in which the desired track pattern is formed. The first and second wheels are mounted on a common shaft to operate in synchronism. A continuous strip of plastic film is directed in the following path in the order recited. The film is wrapped around the second wheel to reverse direction and pass into the first nip, thereby forming the outlet slits. The direction of the film is reversed leaving the first nip to transport the film toward the first wheel. The film is wrapped around a portion of the periphery of the first wheel spaced laterally from the knife blade to reverse direction. The direction of the film is reversed to transport the film toward the third wheel. The film is transported under an extruder to deposit a bead of molten plastic on the film before the third wheel. The film is transported into the second nip to form the desired track in the molten plastic. After the film leaves the third wheel, the hose is finished. The described method forms the outlet slits and the track pattern in a coordinated fashion. As a result, the outlets are not restricted or plugged by the ribs.

The features of specific embodiments of the best mode contemplated of carrying out the invention are illustrated in the drawings, in which:
Figure 1 is a schematic block diagram of the method for making a drip irrigation hose of the continuous emitter type;
Figure 2 is a schematic view of a portion of the film path for making a drip irrigation hose in accordance with the invention; and
Figure 3 is a side partially cutaway view of a length of drip irrigation hose incorporating the principals of the invention.

The disclosures of US-A-4,247,051, US-A-4,984,739 and US-A-5,123,984 are incorporated fully herein by reference.

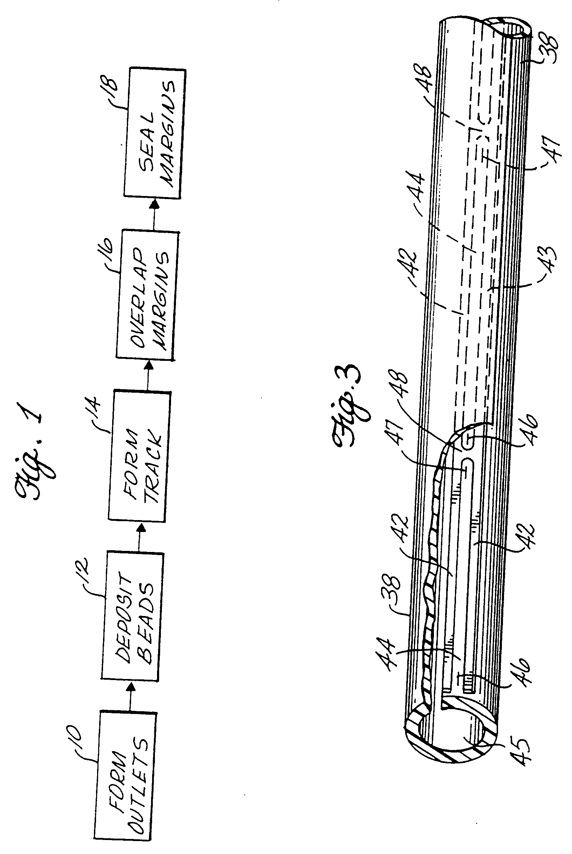

The drip irrigation hose of the invention is made from a continuous strip of flexible, water impervious plastic film, generally ranging in thickness between 0.1mm and 0.4mm (4 and 15 mil). As depicted by block 10 in Figure 1, outlets and/or inlets are formed in the strip of film along one margin. As described in more detail below, each outlet and/or inlet comprises a single longitudinal slit in the film. Next, as depicted by block 12, one or more molten plastic beads made of material compatible with the film are deposited by an extruder on one margin of the film on either side of the outlet slits. Next, as depicted by block 14, the track pattern of the ribs is formed in the molten beads by a rib forming wheel. The track pattern is repeated each time the rib forming wheel completes a revolution. As depicted by block 16, after the ribs are formed, the margins of the film are overlapped to position between them the track pattern. Finally, as depicted by block 18, the overlapping margins are sealed by the still molten ribs to form the finished hose. The described steps, except for formation of the outlets and/or inlets, are shown in more detail in the referenced US-A-5 123 984. Alternatively, either the inlets or the outlets could be formed as interruptions in one of the ribs.

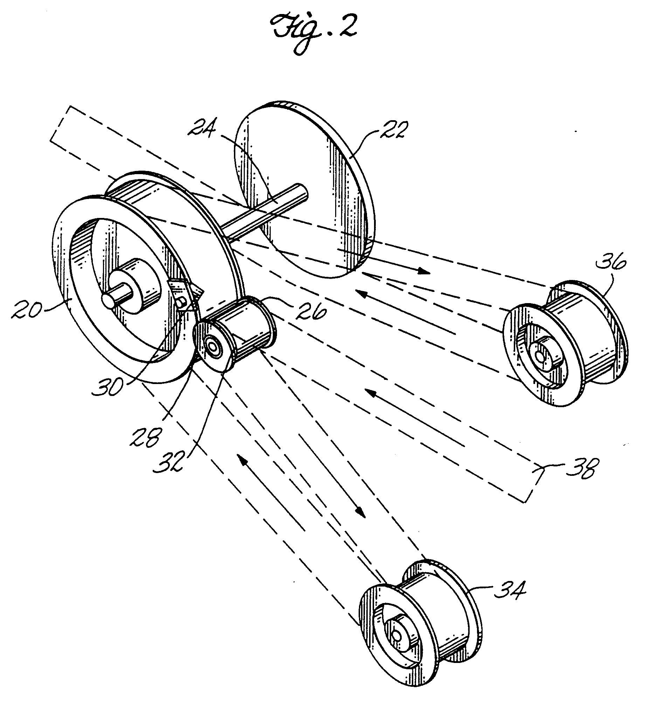

Figure 2 illustrates the path of a continuous strip of film 38 from which the drip irrigation hose is made between the formation of the outlets and/or inlets (block 10) and the formation of the track pattern (block 14). An outlet forming wheel 20 and a rib forming wheel 22 are mounted on a common shaft 24 to synchronize their operation. Wheels 20 and 22 have the same diameter. A backing wheel 26 engages outlet forming wheel 20 to establish a nip 28 therebetween. A knife blade 30 is mounted on the periphery of wheel 20. Wheel 26 has a circumferential slot 32 into which knife blade 30 fits at nip 28. Direction changing wheels 34 and 36 also define part of the film path. Wheels 20, 22, 26, 34 and 36 have flanges to guide film 38 laterally during the manufacturing operation.

Wheel 22 has, around its periphery, impressions (not shown) that define the desired track pattern, for example, one of the track patterns is shown in US-A-4 247 051 patent or in US-A-4 984 739. The direction of movement of film 38 is depicted by the arrows in Figure 2. Film 38 is wrapped around wheel 26 to reverse direction and pass into nip 28. As a result, a slit is formed in film 38 each time blade 30 passes into nip 28. A slit is formed each time wheel 20 completes one revolution. After leaving wheel 26, film 38 is wrapped around wheel 34 to reverse direction and return toward wheel 20. Film 38 is wrapped around a portion of the periphery of wheel 20, spaced laterally from knife blade 30, to reverse direction. After leaving wheel 20, film 38 is wrapped around wheel 36 to reverse direction and move toward wheel 22. Wheel 22 could be canted slightly to provide a smooth transition in the film path between wheels 20 and 22, and the film could twist slightly between wheels 36 and 22. Between wheels 36 and 22, film 38 passes under an extruder 40 which deposits two molten plastic beads on the margin of film 38. A backing wheel (not shown) underlies wheel 22 to form a nip through which film 38 passes to form the molten beads. Since wheels 20 and 22 are mounted on a common shaft, the formation of the outlets and the track pattern is coordinated and their relative positioning is closely controlled. After leaving wheel 22, film 38 is finished in the manner illustrated in Figure 5 of US-A-5 123 984. In a typical embodiment, the diameters of wheels 20 and 22 would be about from 76-152mm (3 to 6 inches), the diameter of wheel 26 would be about 101mm (4 inches), the diameters of wheels 34 and 36 would be about 101mm (4 inches) and the distance between wheels 22 and 36 would be about 610mm (24 inches).

If the inlets also comprise slits another knife blade is mounted on the periphery of wheel 20 laterally spaced from knife blade 30 and wheel 26 has another circumferential slot laterally spaced from slot 32 into which the other knife blade fits. The inlets as well as the outlets are formed as the respective knife blades pass into nip 28.

In Figure 3, the completed drip irrigation hose is shown. Strip 38 is bent along its length to form an overlapping longitudinal seam between an interior margin and an exterior margin of the strip. Spaced apart, transverse ribs 42 and 43 extend longitudinally through the seam to connect the margins of strip 38, forming a seal and a flow regulating passage 44 therebetween. A water supply passage 45, having a much larger cross-section area than flow regulating passage 44 is defined by the remainder of strip 38. Longitudinally spaced apart slits 46 in the portion of strip 38 between supply passage 45 and flow regulating passage 44 serve as inlets to flow regulating passage 44. Longitudinally spaced apart slits 47, formed in the exterior margin of strip 38, serve as outlets from the hose. Slits 47 are displaced from the respective slits 46 to provide a substantial path length from each inlet to a respective outlet. Preferably, cross ribs 48 are employed to divide the flow regulating passage into segments, such that slit 46 is at one end of the segment and a slit 47 is at the other end of a segment. Alternatively, the inlets could be formed by interruptions in rib 42 as illustrated in Figures 5 and 6 of US-A-4 247 051 and as illustrated in US-A-4 984 739. The shape of ribs 42, 43 and 48 are determined by the track pattern on wheel 22 (Figure 2). Preferably, chevrons are formed on the adjacent interior surfaces of ribs 42 and 43 to create turbulent flow in the flow regulating passage as illustrated in US-A-4 984 739.

By controlling the length of the slits and the flexibility of the film, water drips from the outlets when the hose is pressurized without clogging when the hose is depressurized. Typically, the line pressure of the water used for crop irrigation ranges from about 28 kPa to 96 kPa (4 psig to 14 psig). Slits 47 are sufficiently long and strip 38 is sufficiently flexible so the water drips from the outlets when the hose is pressurized, rather than squirting. The effective area of the outlets remains small because the material on both sides of the slits remain in the same plane, rather than buckling. If the slits are too short or the strip is too rigid, the material on either side of the slits does not move sufficiently to make a large hole when the hose is pressurized and water squirts out the hose and erodes the soil. Slits 47 are sufficiently short and strip 38 is sufficiently rigid so the outlets close completely when the hose is depressurized. If the slits are too long or the strip is too flexible, the slits do not close when the hose is depressurized. Typically, the slits are about 6.4mm (¼ inch) for a 0.1mm (4 mil) film thickness and the slits are about 9.5mm (3/8 inch) for a 0.4mm (15 mil) film thickness. Thus, if the slits are much shorter than about 6.4mm (¼ inch) for a 0.1mm (4 mil) film thickness or if the film is much thicker than about 0.1mm (4 mil) for a slit length of about 6.4mm (¼ inch), the water may squirt from the outlets. Similarly, if the slits are much longer than about 9.5mm (3/8 inch) for a 0.4mm (15 mil) film thickness or if the film is much thinner than about 0.4mm (15 mil) for a slit length of about 9.5mm (3/8 inch), the outlets may not close after the hose is depressurized.

## Claims

1. A drip irrigation hose comprising:
an elongated flexible strip of plastic film (38) bent along its length to form a lapped longitudinal seam between opposing longitudinal margins of the film;
means (42,43) for interconnecting the opposing margins along their length to seal the overlapping longitudinal seam and thereby form a large water supply passage;
means for forming a flow regulating passage (44) along the irrigation hose that is much smaller than the water supply passage;
a plurality of longitudinally spaced inlet ports (46) to the flow regulating passage from the water supply passage;
a plurality of longitudinally spaced outlet ports (47) from the flow regulating passage displaced from the respective inlet ports to provide a substantial path length from each inlet port to a respective outlet port,
characterised in that each outlet port consists solely of a single longitudinal knife-blade-formed slit in the strip.

2. The hose of Claim 1, in which the slits are sufficiently long and the strip is sufficiently flexible so the water drips from the port (46) when the hose is pressurized, and the slits are sufficiently short and the strip is sufficiently rigid so the slits close completely when the hose is depressurized.

3. Apparatus for making drip irrigation hose comprising:
an outlet port forming wheel (20) having a knife blade (30) on its periphery;
means for wrapping a continuous moving strip of plastic film (38) around the wheel (20) to form slit outlets (47) repeatedly in one margin of the strip with the knife blade (30);
means (22) for forming a desired track pattern repeatedly on one margin of the film in predetermined relationship with the knife blade formed outlets (47);
means for overlapping the margins of the film to form a water supply passage (45);
means for sealing the overlapping margins to form therebetween a flow regulating passage (44) through the track patterns to the outlets; and
means for repeatedly forming inlets (46) from the water supply passage (45) to the flow regulating passage (44) so a track pattern lies between each inlet and outlet.

4. The apparatus of Claim 3, in which the pattern forming means comprises a track pattern forming wheel (22) means for wrapping the strip of plastic film around the track pattern forming wheel to form the track patterns, and means (24) for coupling the track pattern forming wheel to the outlet port forming wheel to operate in synchronism therewith.

5. The apparatus of Claim 4, in which the coupling means comprises a shaft (24) connected between the wheels.

6. A method for making drip irrigation hose comprising the steps of:
repeatedly forming slit outlets (47) in one margin of a continuous moving strip of plastic film (38) with a knife blade (30);
repeatedly forming a desired track pattern on one margin of the film in predetermined relationship with the outlets;
overlapping the margins of the film to form a water supply passage (45);
sealing the overlapping margins to form therebetween a flow regulating passage through the track patterns to the outlets; and
repeatedly forming inlets (46) from the water supply passage to the flow regulating passage so a track pattern lies between each inlet and outlet.

7. The method of Claim 6, in which the step of forming slit outlets comprises wrapping the strip of plastic film around a wheel (20) having a knife blade (30) on its periphery to form a slit outlet (47) each time the wheel rotates.

8. The method of Claim 6 or Claim 7, in which the step of forming a desired track pattern comprises wrapping the strip of plastic film around a track pattern forming wheel (22) to form a track pattern each time the track pattern forming wheel (22) rotates.

9. A method according to Claim 8 as dependant upon Claim 7, including the step of coupling the track pattern forming wheel (22) to the slit outlet forming wheel (20) to operate in synchronism therewith.

## Patentansprüche

1. Tropfbewässerungsschlauch, mit einem langgestreckten flexiblen Kunststofffolienstreifen (38), der über seine Länge gebogen ist, und so eine überlappende Längsnaht zwischen einander gegenüberliegenden Längsrändern der Folie bildet;
mit Mitteln (42, 43) zur Längsverbindung der gegenüberliegenden Ränder, um die überlappende Längsnaht zu versiegeln und auf diese Weise einen großen Wasserzuführungskanal zu bilden;
mit Mitteln für die Wasserdurchgangsregulierung (44) entlang des Bewässerungsschlauchs, die viel kleiner sind als der Wasserzuführungskanal;
mit einer Vielzahl von in Längsrichtung in einem Abstand zueinander angeordneten Einlauföffnungen (46) vom Wasserzuführungskanal in den Durchflußregulierungskanal;
mit einer Vielzahl von Auslauföffnungen (47), die in Abständen versetzt von den entsprechenden Einlauföffnungen (46) am Durchflußregulierungskanal angeordnet sind, um eine reichliche Weglänge von jeder Einlauföffnung zu einer entsprechenden Auslauföffnung zu bilden, dadurch gekennzeichnet, dass jede Auslauföffnung nur aus einem einzigen von einer Messerschneide gebildeten Längsschlitz im Streifen besteht.

2. Schlauch nach Anspruch 1, bei dem die Schlitze ausreichend lang sind und der Streifen ausreichend flexibel ist, damit Wasser aus der Öffnung (46) austropfen kann, wenn das Schlauchinnere einem Druck ausgesetzt ist, und der Schlauch kurz genug und ausreichend steif ist, dass die Schlitze vollständig schließen, wenn der Schlauch druckentlastet ist.

3. Vorrichtung zur Herstellung eines Tropfbewässerungsschlauchs,
mit einer einen Auslauf bildenden Führungsrolle (20), die an ihrem Umfang eine Messerschneide (30) besitzt;
mit Mitteln zum Wickeln eines endlos laufenden Streifens (38) um die Rolle (20), um wiederholt schlitzförmige Auslauföffnungen (47) an einem Rand des Streifens mit der Messerschneide (30) zu bilden;
mit Mitteln (22) zur wiederholten Anbringung einer vorbestimmten Profilspur an einem Rand der Folie in einem vorbestimmten Lageverhältnis zu den durch die Messerschneiden gebildeten Auslauföffnungen (47);
mit Mitteln zur Überlappung der Ränder, um zwischen diesen einen Wasserzuführungskanal (45) zu bilden; mit Mitteln zur Versiegelung der überlappenden Ränder, um zwischen ihnen einen Durchflußregulierungskanal (44) durch die Profilspuren zu den Auslauföffnungen zu bilden; und
mit Mitteln zur wiederholten Bildung von Einlauföffnungen (46) vom Wasserzuführkanal (45) zu den Durchflußregulierungskanälen (44), damit die Profilspur jeweils zwischen einer Einlauf- und einer Auslauföffnung verläuft.

4. Vorrichtung nach Anspruch 3, bei der die Baugruppe, die die Profilspur bildet, eine Profilauftragsscheibe (22), Mittel, die den Plastikfolienstreifen um die Profilauftragsscheibe (22) wickeln, um die Profilspur anzubringen, und Mittel (24) aufweist, welche die Profilauftragsscheibe (22) mit der Rolle (20) verbinden, auf der die Auslauföffnungen (47) gebildet werden, um einen Synchronlauf zu ermöglichen.

5. Vorrichtung nach Anspruch 4, bei der die Verbindungselemente eine Welle (24) besitzt, die die Scheiben verbindet.

6. Verfahren zur Herstellung eines Tropfbewässerungsschlauchs, das folgende Schritte aufweist:
Wiederholte Bildung von schlitzförmigen Auslauföffnungen (47) an einem Rand eines kontinuierlich laufenden Kunststofffolienstreifens (38) mit Hilfe einer Messerschneide (30);
wiederholte Anbringung einer gewünschten Profilspur an einem Rand der Folie in einem vorbestimmten Lageverhältnis zu den Auslauföffnungen; Überlappung der Folienränder, um einen Wasserzuführkanal (45) zu bilden;
Versiegeln der überlappenden Ränder, um zwischen Ihnen einen Durchflußregulierungskanal durch die Profilspuren zu den Auslauföffnungen zu bilden; und
wiederholte Bildung von Einlauföffnungen (46) aus dem Wasserzuführkanal in den Durchflußregulierungskanal, damit die Profilspur zwischen Ein- und Auslauföffnungen verläuft.

7. Verfahren nach Anspruch 6, bei dem der Schritt zur Bildung der schlitzartigen Auslauföffnungen das Wickeln des Kunststofffolienstreifens um eine Rolle (20) einschließt, die an ihrer Peripherie eine Messerschneide (30) aufweist, welche letztere bei jeder Umdrehung der Rolle eine Auslauföffnung (47) bildet.

8. Verfahren nach Anspruch 5 oder 6, bei dem der Schritt zur Bildung der gewünschten Profilspur das Wickeln des Kunststofffolienstreifens um eine Profilauftragsscheibe (22) einschließt, um bei jeder Umdrehung der Profilauftragsscheibe (22) eine Profilspur herzustellen.

9. Verfahren nach Anspruch 8 in Verbindung mit Anspruch 7, bei dem der Schritt zur Verbindung der Profilauftragsscheibe (22) die Sychronschaltung der Profilauftragsscheibe (22) mit der die Auslauföffnungen bildenden Rolle (20) einschließt.

## Revendications

1. Tuyau d'irrigation goutte à goutte comprenant:
une bande flexible allongée de film de matière plastique (38) recourbée sur sa longueur pour former une jonction longitudinale à recouvrement entre les bords longitudinaux opposés du film;
un moyen (42, 43) de connexion des bords opposés sur leur longueur afin de réaliser un joint étanche à la jonction longitudinale où le film se recouvre, et de former ainsi un grand passage d'amenée d'eau;
un moyen de formation, le long du tuyau d'irrigation, d'un passage régulateur (44) d'écoulement qui est beaucoup plus petit que le passage d'amenée d'eau;
une série d'orifices d'entrée (46), espacés longitudinalement, menant au passage régulateur d'écoulement, a partir du passage d'amenée d'eau;
une série d'orifices de sortie (47), espacés longitudinalement, sortant du passage régulateur d'écoulement, lesdits orifices étant décalés par rapport aux orifices respectifs d'entrée pour réaliser une longueur sensible de trajet à partir de chaque orifice d'entrée jusqu'à un orifice respectif de sortie,
caractérisé en ce que chaque orifice de sortie consiste seulement en une fente longitudinale unique réalisée dans la bande par une lame de couteau.

2. Tuyau selon la revendication 1, dans lequel les fentes sont suffisamment longues et la bande est suffisamment flexible pour que l'eau s'écoule goutte à goutte de l'orifice (46) lorsque le tuyau est sous pression, et les fentes sont suffisamment courtes et la bande est suffisamment rigide pour que les fentes se ferment complètement lorsque le tuyau cesse d'être sous pression.

3. Appareil de fabrication d'un tuyau d'irrigation goutte à goutte, comprenant:
une roue (20) de formation d'orifices de sortie qui comporte une lame de couteau (30) sur sa périphérie;
un moyen d'enroulement, autour de la roue (20), d'une bande en déplacement continu de film de matière plastique (38), pour former de façon répétée, à l'aide de la lame de couteau (30), des sorties sous forme de fentes (47) dans l'un des bords de la bande;
un moyen (22) de formation répétée d'une configuration souhaitée de piste sur un bord du film selon une relation prédéterminée avec les sorties (47) formées par la lame de couteau;
un moyen destiné à amener les bords du film à se recouvrir mutuellement pour former un passage (45) d'amenée d'eau;
un moyen de formation d'un joint étanche entre les bords qui se recouvrent pour former entre eux un passage régulateur (44) d'écoulement qui traverse les configurations de pistes vers les sorties; et
un moyen de formation répété d'entrées (46) à partir du passage (45) d'amenée d'eau vers le passage régulateur (44) d'écoulement, de façon qu'une configuration de piste soit établie entre chaque entrée et chaque sortie.

4. Appareil selon la revendication 3, dans lequel le moyen de formation des configurations comprend une roue (22) de formation des configurations de pistes, un moyen d'enroulement de la bande de film plastique autour de la roue de formation des configurations de pistes afin de former les configurations de pistes, et un moyen (24) d'accouplement de la roue de formation des configurations de pistes à la roue de formation des orifices de sortie pour qu'elle opère en synchronisme avec celle-ci.

5. Appareil selon la revendication 4, dans lequel le moyen d'accouplement comprend un arbre (24) connecté entre les roues.

6. Procédé de fabrication d'un tuyau d'irrigation goutte à goutte comprenant l'étape consistant à:
former de façon répétée, à l'aide d'une lame de couteau (30), des sorties sous forme de fentes (47) dans un bord d'une bande de matière plastique en déplacement continu;
former de façon répétée une configuration souhaitée de pistes sur l'un des bords du film selon une relation prédéterminée avec les sorties;
amener les bords du film à se recouvrir mutuellement pour former un passage (45) d'amenée d'eau;
joindre de façon étanche les bords qui se recouvrent afin de former entre eux un passage régulateur (44) d'écoulement qui traverse les configurations de pistes vers les sorties; et
former de façon répétée des entrées (46), à partir du passage d'amenée d'eau vers le passage régulateur d'écoulement, de façon qu'une configuration de piste soit établie entre chaque entrée et chaque sortie.

7. Procédé selon la revendication 6, dans lequel l'étape de formation des sorties sous forme de fentes comprend l'étape consistant à enrouler la bande de film de matière plastique autour d'une roue (20) qui porte sur sa périphérie une lame de couteau (30), afin de former une sortie sous forme de fente (47) chaque fois que la roue tourne.

8. Procédé selon la revendication 6 ou la revendication 7, dans lequel l'étape de formation d'une configuration souhaitée de pistes comprend l'étape consistant à enrouler la bande de film de matière plastique autour d'une roue (22) de formation de configurations des pistes, afin de former une configuration de piste chaque fois que la roue (22) de formation des configurations de pistes tourne.

9. Procédé selon la revendication 8 prise en dépendance de la revendication 7, qui inclut l'étape consistant à accoupler la roue (22) de formation des configurations de pistes à la roue (20) de formation des sorties sous forme de fentes pour qu'elle opère en synchronisme avec celle-ci.
